# EUROPEAN PATENT APPLICATION

(11) **EP 4 024 032 A1**
(43) Date of publication of application: **06.07.2022**
(21) Application number: 20383184.7
(22) Date of filing: 31.12.2020
(51) Int. Cl.: G01N 21/65, B82Y 15/00, B82Y 30/00

(54) **A SURFACE ENHANCED RAMAN SCATTERING (SERS) COMPOSITION COMPRISING METAL NANOPARTICLES (NPS) AGGLOMERATES**

(71) Applicant: Universitat Pompeu Fabra, 08002 Barcelona (ES); Mir de Simon, Bernat, 08017 Barcelona (ES)
(72) Inventor: MIR DE SIMON, BERNAT, 08017 BARCELONA (ES); RIVERA GIL, María Pilar, 08002 BARCELONA (ES)
(74) Representative: ZBM Patents - Zea, Barlocci & Markvardsen

(57) **Abstract**

The present invention refers to Surface enhanced Raman scattering (SERS) composition comprising metal nanoparticles (NPs) agglomerates, a label that comprises it, its process of production, and their use to label, for example, to avoid counterfeiting and/or for product authentication.

## Description

### Technical Field

The present invention relates in general to the field of labelling of articles. It refers to a labelling composition which comprises surface enhanced Raman Scattering (SERS) metal nanoparticles agglomerates.

### Background Art

In recent years, there has been a dramatic increase in counterfeit goods affecting every industry. Any branded product can be counterfeited leaving global brand manufacturers vulnerable to revenue loss, liabilities, and brand erosion. Products moving through the manufacturing and distribution process go through different channels, presenting an opportunity for counterfeit products to enter the legitimate supply chain at any point. Trade in counterfeit and pirated goods amounted to up to 3.3 % of world trade in 2019, representing USD 509 billion losses. A wide range of products are affected, from luxury and business-to-business goods to common consumer products.

For years, the luxury industry has waged a battle against counterfeiters. It has invested heavily in ultra-sophisticated tech solutions which use the latest advances in internet of things (loT) and Artificial Intelligence (Al) to authenticate products, for example, Radiofrequency identification (RFID) technologies, which uses electromagnetic fields to automatically identify and track tags attached to objects, wherein a RFID tag consists of a tiny radio transponder, a radio receiver and transmitter. Another system used is the satellite-based radio navigation system Global Positioning System (GPS), for example, real time GPS system to monitor the transportation trucks after the manufacturing process. Some bag manufacturers have introduced serial numbers on the nameplate inside the bag, other companies studied the idea of placing a localization chip inside the luxury good, or identity documents (with complex fingerprints) are given at the time of sale. However, existing authentication technologies techniques do not provide a cheap or efficient way to verify the authenticity of a product and to track and trace it along the whole supply chain. Besides, they suffer from intrinsic limitations: identity documents or truck tracking do not tag the luxury good itself, localization chips compromise privacy, serial numbers are easily copied, GPS tracks are easily extracted, and they require cumbersome identification processes. Luxury experts remain as the "gold standard" method to identify fake products in the luxury market but this an expensive non-scalable process.

Therefore, there is a need to develop a new technology that allows a rapid, easy, cheap, and robust identification of any good along the whole supply chain.

### Summary of Invention

The inventors have surprisingly found a SERS composition comprising encoded metal nanoparticles (NPs) that allows to obtain a strong SERS response.

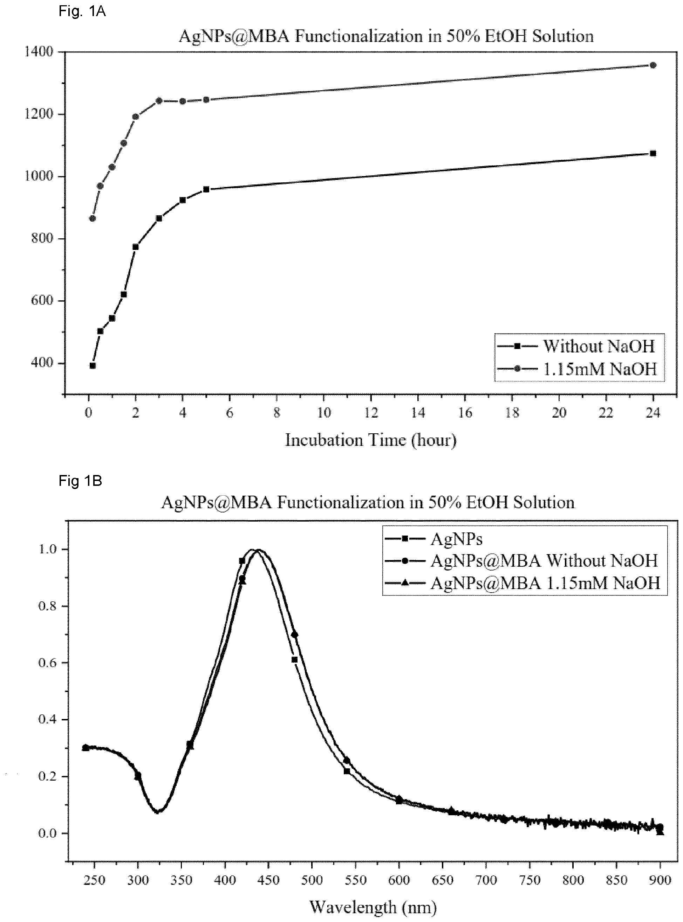

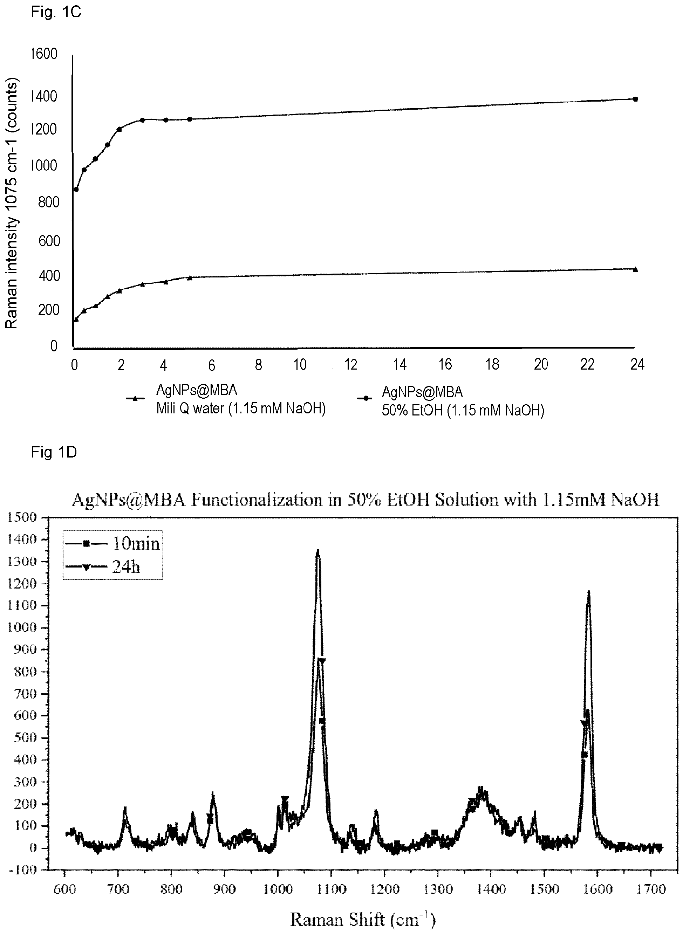

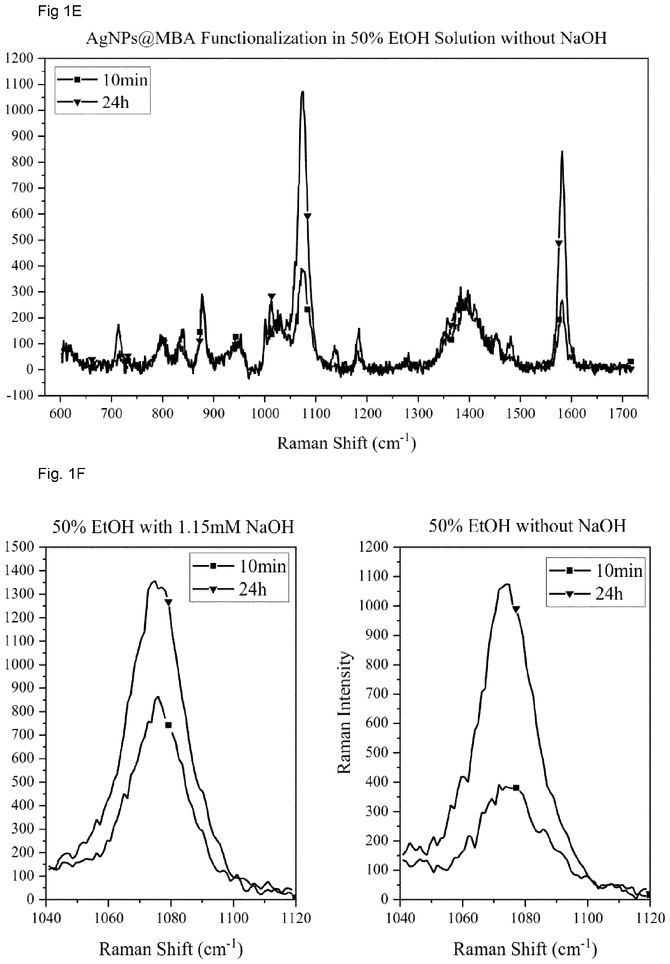

The method of the invention to produce the SERS composition comprising encoded metal NPs relies on the controlled co-adsorption of a SERS reporter (Raman code) and a SERS polymeric stabilizer on the metallic surfaces of the NPs, followed by a controlled agglomeration step. By performing the conjugation of the SERS reporter and the polymeric stabilizer in basic conditions in a solution of water and (C1-C4) alcohol, the inventors have found that the SERS intensity is surprisingly increased (see figure 1). By controlling the agglomeration step of the SERS encoded metal NPs, the inventors have surprisingly increased up to nearly 40 times the SERS efficiency of the NPs. The controlled agglomeration of labelled-NPs into dimers, trimers, tetramers, pentamers, hexamers or mixtures thereof generate very active SERS structures with high SERS response, even with a low number of SERS reporter and SERS polymeric stabilizer per nm² of NP surface (as shown in the example 1).

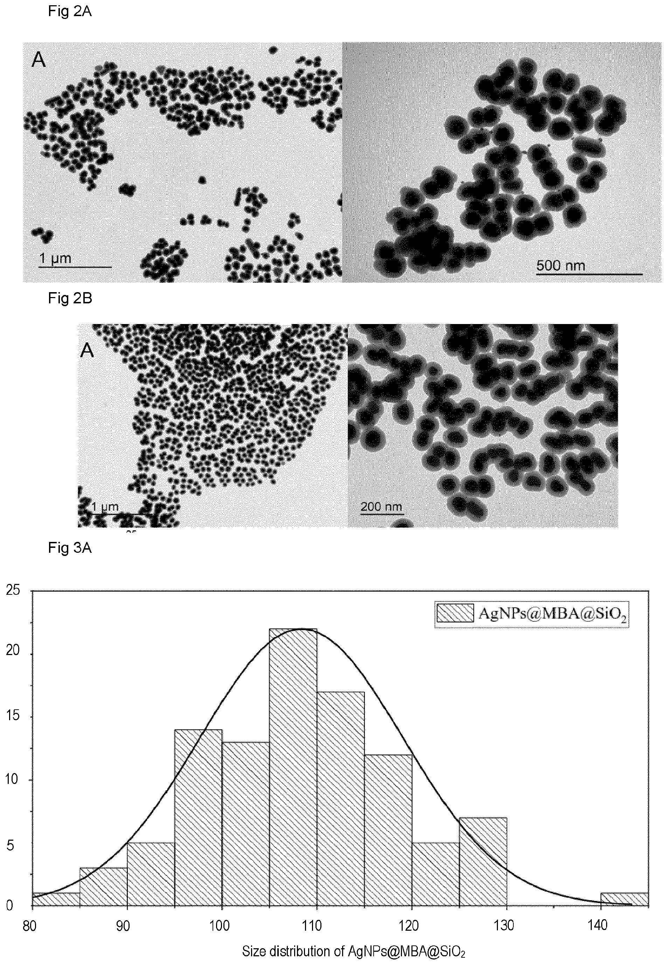

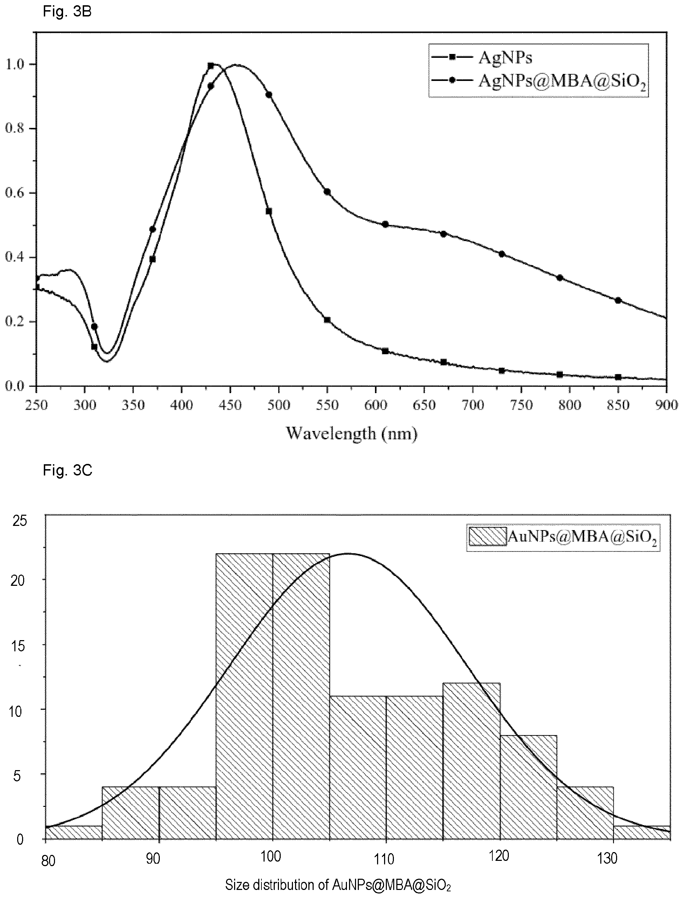

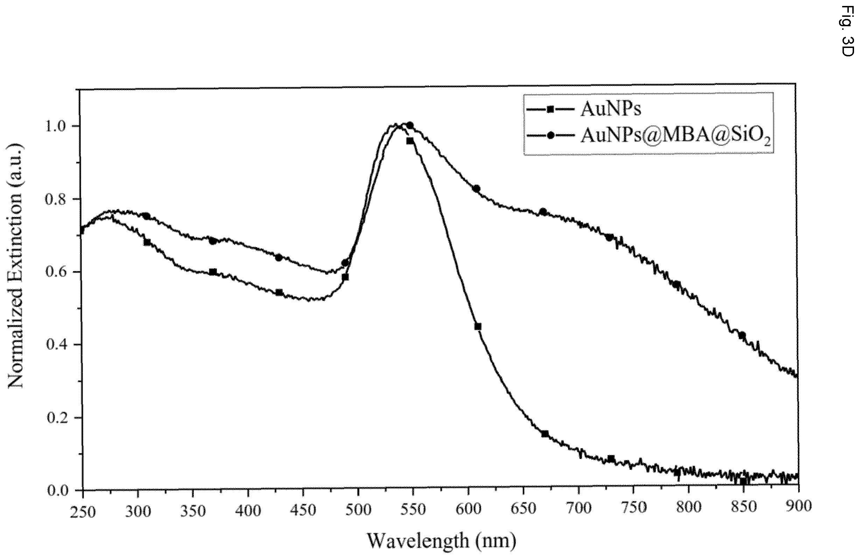

The inventors have demonstrated that the SERS encoded metal NPs agglomerates of the invention can be obtained using different metal NPs, such as silver and gold (see example 1 and figures 2 and 3).

By using the composition comprising the SERS encoded metal NPs agglomerates of the present invention to label any type of article (see example 2, e.g., leather, polyester; fabrics, plastic, metal, and glass), it is possible to unequivocally identify and track said article along the whole supply chain. Therefore, the inventors have developed a method to avoid counterfeiting, for example, of luxury articles.

The high-tech labelling of the present invention provides a unique signal once illuminated, for example, for less than 2 seconds (as seen in example 2), with a handheld Raman spectrometer, using electromagnetic fields. The Raman spectrometer can be located at a shop wherein the customer can bring his/her luxury product and can confirm *in situ* its authenticity.

This method outperforms the existing authentication technologies (*i.e.* serial numbers, RFID, GPS trackers, artificial intelligence, technologies to mark raw fibers, etc.) in terms of robustness, sensitivity (≥99.9%), and speed (≤2 seconds). Besides, it does not compromise privacy, may give a unique signal for each single item improving the customer experience, and removes cumbersome identification processes.

The NP agglomerates of the present invention are protected with a homogenous layer of a metal oxide (coating), for example, of silicon dioxide, and their stability is preserved for many years. The unique properties of the metal oxide (e.g., SiO₂) (e.g., known surface chemistry, biocompatibility, optical transparency, and colloidal stability) make this material an efficient protective layer for the NP agglomerates. This layer protects the plasmonic NP agglomerates from contaminations, oxidation and guarantees the SERS signal stability for a long period of time.

The SERS NPs agglomerates of the present invention can be located on the surface of any article, on a millimetric drilled hole or injected into porous materials (example 2).

Thus, a first aspect of the invention refers to a SERS composition comprising metal nanoparticles (NPs) agglomerates, wherein at least 60% in weight of the agglomerates are in form of isolated dimers, trimers, tetramers, pentamers, hexamers, or mixtures thereof, wherein the metal NPs agglomerates comprise NPs which comprise in their surface a SERS reporter and a polymeric stabilizer, and wherein each agglomerate is encapsulated with a coating of a metal oxide.

A second aspect of the invention refers to a labelling tag that comprises the SERS composition of the first aspect of the invention.

A third aspect of the invention refers to a use of the SERS composition of the first aspect of the invention, or the labelling tag of the second aspect of the invention, for labelling an article.

A fourth aspect of the invention refers to an article that comprises the SERS composition of the first aspect of the invention, or the labelling tag of the second aspect of the invention.

A fifth aspect of the invention refers to a method of preparing the SERS composition of the first aspect of the invention comprising the steps of:
(a) providing metal NPs;
(b) conjugating the metal NPs with a SERS reporter and a polymeric stabilizer by contacting the nanoparticles, the SERS reporter, and the polymeric stabilizer in basic conditions in a solution of water and (C₁-C₄) alcohol; yielding to a codified SERS and functionalized metal NPs and,
(c) agglomerating the codified SERS and functionalized metal NPs obtained in step (b) by centrifuging the solution obtained on step (b) at a pH of 7 to 12 at a speed of 4,000-6,000 r.p.m., generally during 10 to 40 minutes, re-suspending the codified SERS and functionalized metal NPs in water; centrifuging them at a speed of 1,500 to 4,000 r.p.m. at pH 4 to 6.5, generally during 10 to 30 minutes to form the agglomerates, and re-suspending the obtained agglomerates in a solution comprising water;
(d) encapsulating the codified SERS and functionalized metal NPs agglomerates obtained in step (c) with a coating of a metal oxide, by adding the metal oxide in suitable conditions yielding to encapsulated NPs agglomerates.

A sixth aspect of the invention refers to a method to locate, to identify, and/or to track an article which comprises using of SERS detection means over the article of the fourth aspect of the invention.

A seventh aspect of the invention refers to a device that comprises the SERS composition of the first aspect of the invention.

### Brief Description of Drawings

Fig. 1 shows the characterization of MBA encoded AgNPs (AgNPs@MBA with TPEGCOOH (7.5k)) with under different codification conditions. A represents the SERS intensity of the characteristic ring breathing band (1075 cm⁻¹) of the MBA molecules adsorbed on AgNPs over the time. It shows the adsorption kinetics of MBA on the metallic surface of AgNPs suspended in a mixture of water/ethanol in the presence or not of NaOH. Y-axis, Raman intensity (1075 cm⁻¹). B represents the UV-vis characterization of the MBA functionalized AgNPs after 3 days of the addition of the Raman code in a mixture of water/ethanol. It compares the addition or not of NaOH to the mixture. Y-axis, Normalized extintion. C, SERS intensity of the characteristic ring breathing band (1075 cm⁻¹) of the MBA molecules adsorbed on AgNPs over the time. Compares the adsorption kinetics of MBA on the metallic surface of AgNPs suspended in water or in a mixture of water/ethanol and with the addition of NaOH. Y-axis, Raman intensity. D and E show the characteristic bands of the MBA adsorbed on the metallic surface of silver nanoparticles when the functionalization was performed with (1E) or without (1E) NaOH. F, detail of figs. E and F. Y-axis, Raman intensity.
Fig. 2 shows TEM images of AgNPs-TPEGCOOH (7.5k)/MBA-SiO₂ (A) and of AuNPs-TPEGCOOH (7.5k)/MBA-SiO₂ (B).
Fig. 3 shows the characterization of the noble metal NPs. A, Size Histogram of AgNPs-TPEGCOOH (7.5k)/MBA-SiO₂. (Y-axis, percentage) B, UV-Vis characterization of citrate capped AgNPs and AgNPs-TPEGCOOH (7.5k)/MBA-SiO₂ (Y-axis, Normalized extinction (a.u.). C, Size Histogram of AuNPs-TPEGCOOH (7.5k)/MBA-SiO₂ (Y-axis, percentage). D, UV-Vis characterization of citrate capped AuNPs and AuNPs-TPEGCOOH (7.5k)/MBA-SiO₂ (Y-axis, Normalized extinction (a.u.)). AgNPs@MBA@SiO₂, AgNPs-TPEGCOOH (7.5k)-MBA-SiO₂; AuNPs@ MBA@SiO2, AuNPs-TPEGCOOH (7.5k)-MBA-SiO₂.

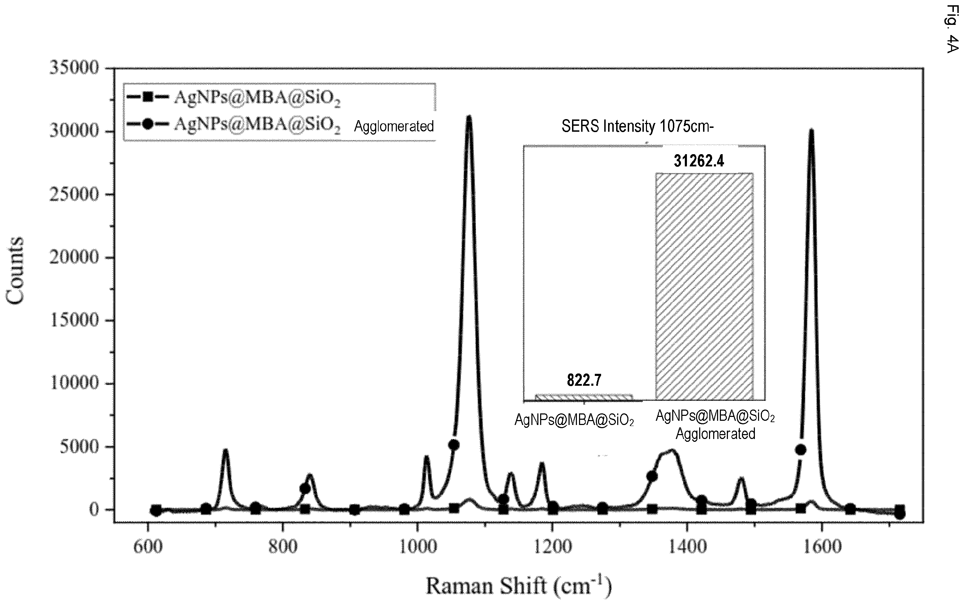

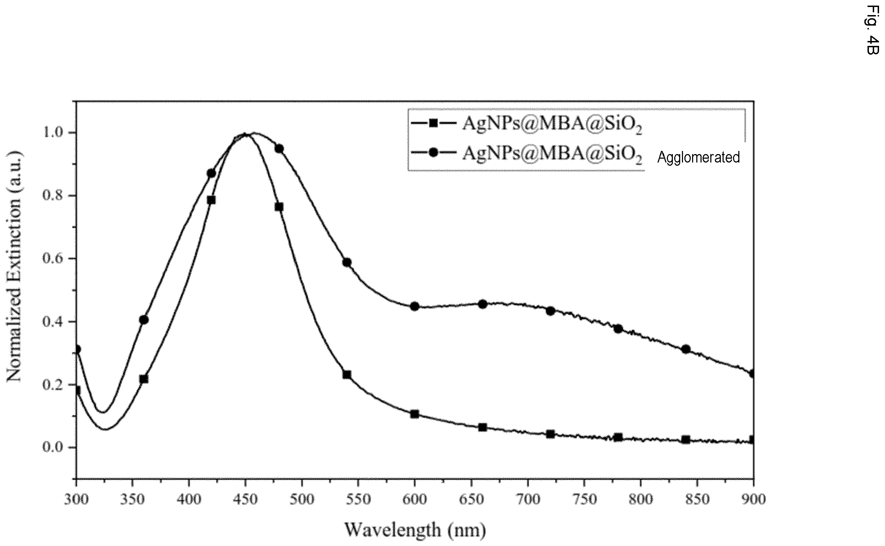

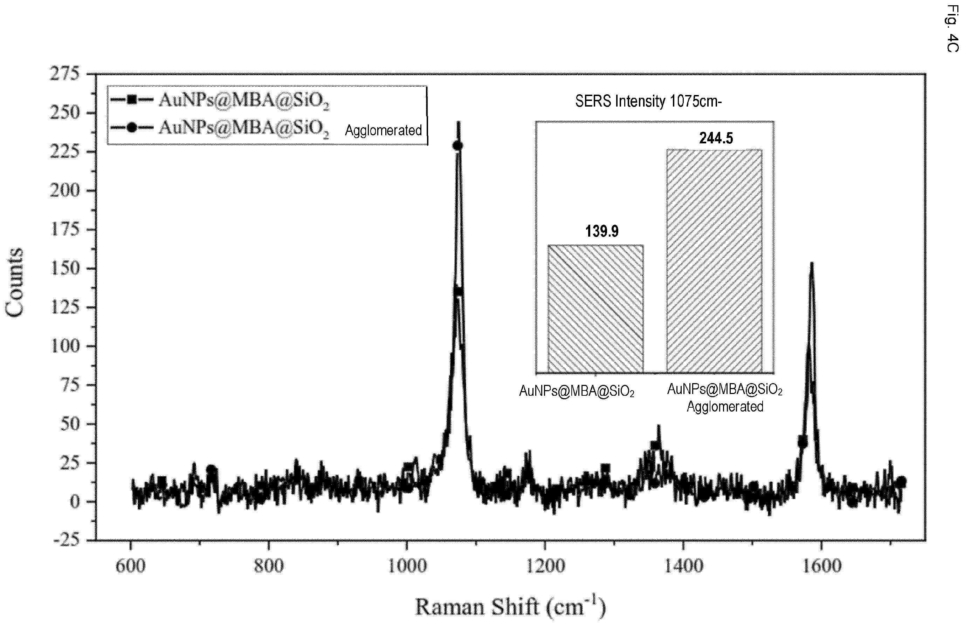

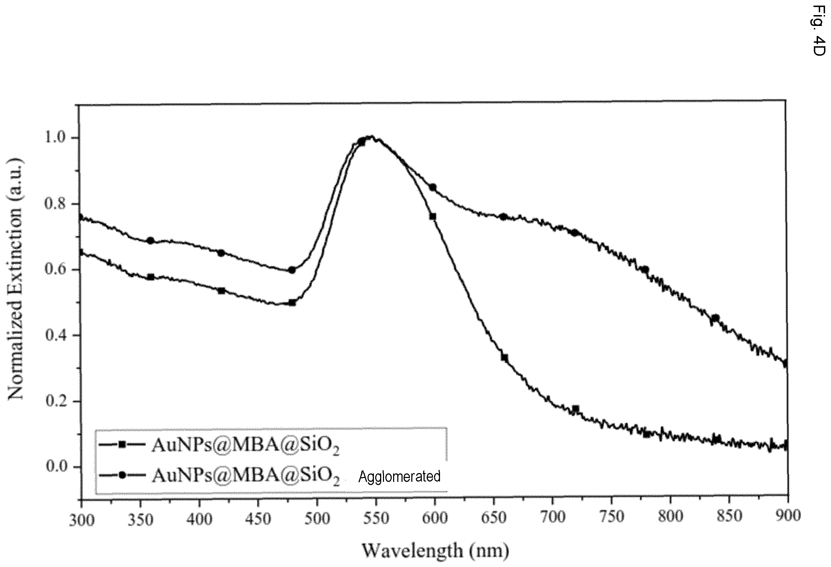

Fig. 4 shows the comparative between agglomerated and non-agglomerated NPs. A, SERS characterization of AgNPs-TPEGCOOH (7.5k)/MBA-SiO₂ suspended in a MilliQ water solution. B, UV-vis characterization of AgNPs-TPEGCOOH (7.5k)/MBA-SiO₂ NPs. C, SERS characterization of AuNPs-TPEGCOOH (7.5k)/MBA-SiO₂ suspended in a MilliQ water solution. D, UV-vis characterization of AuNPs-TPEGCOOH (7.5k)/MBA-SiO₂ NPs. AgNPs@MBA@SiO₂, AgNPs-TPEGCOOH (7.5k)-MBA-SiO₂; AuNPs@ MBA@SiO₂, AuNPs-TPEGCOOH (7.5k)-MBA-SiO₂.

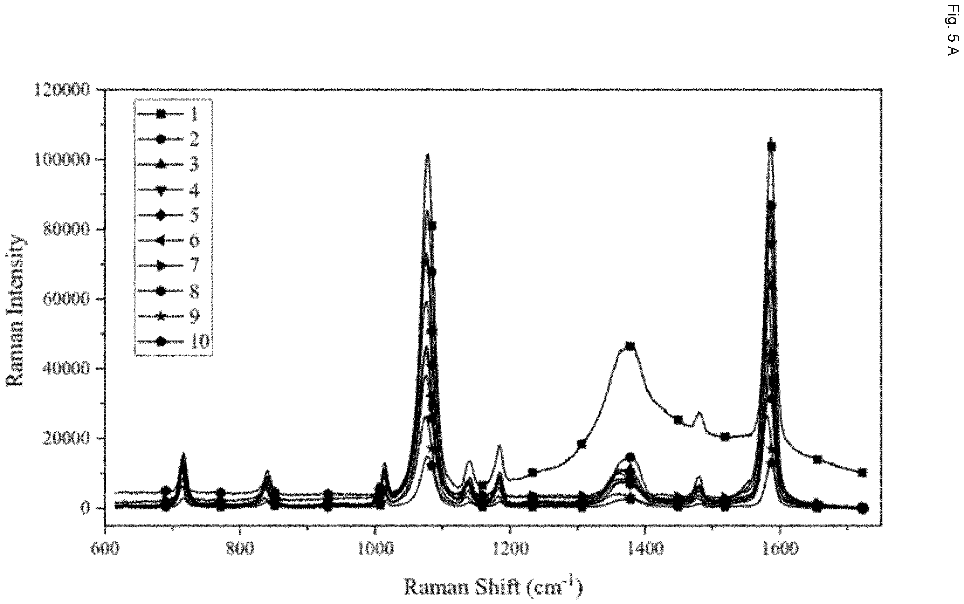

Fig. 5A shows the Raman characterization of different objects wherein the AgNPs-TPEGCOOH (7.5k)/MBA-SiO₂ has been placed on the surface. 1, semi-aniline leather; 2, aniline leather; 3, pigmented leather; 4, polyester; 5, silk; 6, plastic (PVC); 7, glass; 8, brass; 9, cotton; and 10, dyed pigmented leather. B, detail.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

For purposes of the present invention, any ranges given include both the lower and the upper endpoints of the range. Ranges given, such as weights, ratios, and the like, should be considered approximate, unless specifically stated.

The first aspect of the invention refers to a Surface enhanced Raman scattering (SERS) composition comprising metal nanoparticles (NPs) agglomerates, wherein at least 60% in weight of the agglomerates are in form of isolated dimers, trimers, tetramers, pentamers, hexamers, or mixtures thereof, wherein the metal NPs comprises in their surface a SERS reporter and a polymeric stabilizer, and wherein each agglomerate is encapsulated with a coating of a metal oxide.

In the present invention the agglomerates comprise metal NPs that comprise in their surface a SERS reporter and a polymeric stabilizer; therefore, the metal NP agglomerates of the SERS composition of the present invention comprise in their surface the SERS reporter and the polymeric stabilizer.

SERS is a vibrational spectroscopy technique that allows for highly sensitive structural detection of low concentration analytes through the amplification of electromagnetic fields generated by the excitation of plasmonic nanoparticles. Raman measurements can be carried out over a wide spectral range, are insensitive to air and water and require no sample preparation. SERS produces a remarkable amplification of the Raman signal by electromagnetic enhancement and chemical enhancementSERS is also characterized by an extreme experimental flexibility since Raman measurements can be carried out over a wide spectral range, are insensitive to air and water and require no sample preparation. SERS produces a remarkable amplification of the Raman signal by several orders of magnitude with enhancement factors >10⁶ and it is due to two mechanisms: an effect known as electromagnetic enhancement increases the Raman signal by the magnification of both incident and Raman scattered fields; on the other hand, the electronic interaction between the molecule and the metal can modify the scattering process itself and produce an effectively larger cross-section that would occur by light scattering from the molecule alone, an effect known as chemical enhancement.

Noble metal nanoparticles in suspension, for example, made of silver (Ag) or gold (Au), are useful for SERS due to their versatility and easy synthesis with a high degree of control over the composition, shape and size. These solids comprise hundreds to a few thousand of atoms each and can be stabilized by polymers, surfactants, proteins, and aliphatic molecules, among others. Their size usually ranges from 2-3 nm to about 500 nm.

SERS metal NPs may obtain hot spots. Hot spots are concentrations of the electromagnetic field by the plasmonic coupling of the particles when they are very close to each other.

In the present invention the term "nanoparticles" (NPs) are nanoobjects (already recognized by International Organization for Standardization in the document with the reference number ISO/TS 27687:2008(E)) with all three external dimensions in the nanoscale.

In the present invention, the SERS composition is a composition comprising the SERS NPs agglomerates as defined in the first aspect of the invention, and, for example, water or ethanol; therefore, it is a liquid composition.

In a particular embodiment of the first aspect of the invention, optionally in combination with any of the embodiments provided below, the SERS composition is a liquid colloidal composition.

In a particular embodiment of the first aspect of the invention, optionally in combination with any of the embodiments provided above or below, the SERS composition is an ink. As the liquid component of the composition of the present invention (such as ethanol or water) can evaporate, therefore, the present inventio also refers to the dried composition of the first aspect of the invention. Thus, any of the aspects and particular embodiments of the invention, optionally in combination with any of the embodiments provided above or below, include the dried SERS composition of the first aspect of the invention.

In the present invention, the metal NP agglomerate is a SERS metal NP agglomerate and can also be named as codified SERS and functionalized metal NPs agglomerate, codified SERS metal NPs agglomerate, or coded SERS metal NP agglomerate.

In a particular embodiment of the first aspect of the invention, optionally in combination with any of the embodiments provided above or below, each of the NPs agglomerates are encapsulated with a coating of a metal oxide selected from the group consisting of: silicon dioxide (SiO₂), titanium dioxide (TiO₂), aluminium oxide (Al₂O₃), indium oxide (In₂O₃), tin oxide (SnO₂), zinc oxide (ZnO), and any combination thereof (for example, indium tin oxide (ITO) or Al2O₃-SiO₂).

In a particular embodiment of the first aspect of the invention, optionally in combination with any of the embodiments provided above or below, each of the NPs agglomerates are encapsulated with a coating of SiO₂, or, alternatively, of TiO₂.

In a particular embodiment of the first aspect of the invention, optionally in combination with any of the embodiments provided above or below, the SERS composition is obtainable by a process that comprises the following steps:
(a) providing metal NPs;
(b) conjugating the metal NPs with a SERS reporter and a polymeric stabilizer by contacting the nanoparticles, the SERS reporter, and the polymeric stabilizer in basic conditions in a solution of water and (C₁-C₄) alcohol (for example, ethanol, methanol, and isopropanol (e.g., a mixture of water/alcohol (40-60% v/v, e.g., 50% v/v)); yielding to a codified SERS and functionalized metal NPs and,
(c) agglomerating the codified SERS and functionalized metal NPs obtained in step (b) by centrifuging the solution obtained on step (b) at a pH of 7 to 12 (for example, pH 8) at an speed of 4,000-6,000 r.p.m. (four thousand (4000) to six thousand (6000) r.p.m.) (for example, 4,800 r.p.m. (2,189 x g), generally during 10-40 minutes (for example, 30 minutes), re-suspending the codified SERS and functionalized metal NPs in water; centrifuging them at a speed of 1,500 to 4,000 r.p.m. (one thousand five hundred (1500) to four thousand (4000) r.p.m.) (for example, 2,000 r.p.m. (380 x g)) at pH 4 to 6.5 (e.g. at pH 5 to 6 (e.g. pH∼5.5)), generally during 10-30 minutes to form the agglomerates, and re-suspending the obtained agglomerates in a solution comprising water;
(d) encapsulating with a coating of metal oxide (for example, the metal oxides disclosed above) (e.g., in suitable conditions) for the yielding to encapsulated NPs agglomerates; for example, when the metal oxide is SiO₂, then, NH₄OH, (C₁-C₄) alcohol and tetraethyl ortosilicate are added to the solution obtained in step (c); or, alternatively, when the metal oxide is TiO₂, tetrabutyl titanate (TBOT) in NH₄OH, and (C₁-C₄) alcohol (for example, ethanol/ammonia) are added to the solution obtained in step (c).

In a particular embodiment of the first aspect of the invention, optionally in combination with any of the embodiments provided above or below, the (C₁-C₄) alcohol in step (b) is ethanol. For example, the mixture of water/ethanol is 40-60% v/v, e.g., is 50% v/v.

In a particular embodiment of the first aspect of the invention, optionally in combination with any of the embodiments provided above or below, the basic conditions in step (b) are obtained with NaOH at pH 7.5-9 (e.g., pH 8) in a solution of water and ethanol, for example the mixture of water/ethanol is 40-60% v/v, e.g., is 50% v/v.

In a particular embodiment of the first aspect of the invention, optionally in combination with any of the embodiments provided above or below, the SERS composition is obtainable by the above indicated process further comprises the following steps:
(e) centrifuging the encapsulated metal NP agglomerates to remove excess reactants, and
(f) re-dispersing the encapsulated agglomerate in a suitable solvent (for example, ethanol, N,N-dimethylformanide, chloroform, or methanol).

In a particular embodiment of the first aspect of the invention, optionally in combination with any of the embodiments provided above or below, in step (f) the solvent is ethanol.

In a particular embodiment of the first aspect of the invention, optionally in combination with any of the embodiments provided above or below, the (C₁-C₄) alcohol in step (b), and (d) (in step (d) when the metal oxide coating is SiO₂ or TiO₂), and the suitable solvent in step (f) is ethanol

In a particular embodiment of the first aspect of the invention, optionally in combination with any of the embodiments provided above or below, the metal of the NP is selected from the group consisting of: silver, gold, copper, nickel, palladium, platinum, ruthenium, rhodium, osmium, iridium, zinc, titanium, chromium, iron, cobalt, palladium, cadmium, ruthenium, alloys of any of them and any combination thereof.

In a particular embodiment of the first aspect of the invention, optionally in combination with any of the embodiments provided above or below, the metal of the NP is silver.

In a particular embodiment of the first aspect of the invention, optionally in combination with any of the embodiments provided above or below, the metal of the NP is gold.

Methods for the preparation of the colloidal NPs are known by the expert in the field, for example, top-down and bottom-up methods. For example, a top down method involves the mechanical grinding of bulk metals and subsequent stabilization of the resulting nanoscaled metal particles by the addition of colloidal protecting agents. The bottom up methods of wet chemical nanoparticle synthesis rely on the chemical reduction of metal salts, electrochemical pathways, or controlled decomposition of metastable organometallic compounds. For example, the preparation is performed, with shape and size control, by means of chemical reactions that are well known to those skilled in the art.

In a particular embodiment of the first aspect of the invention, optionally in combination with any of the embodiments provided above or below, gold nanoparticles are provided, and the method used to do so is based on synthetic methods that are broadly described in the literature, such as the so-called sodium citrate method (Turkevich, J., P. C. Stevenson, et al. (1951). "The nucleation and growth processes in the synthesis of colloidal gold." Discussions of the Faraday Society 11: 55-75), or by reduction with sodium borohydride (NaBH₄) (Haiss, W., N. T. Thanh, et al. (2007). "Determination of size and concentration of gold nanoparticles from UV-vis spectra." Anal Chem 79(11): 4215-21).

In another embodiment, silver nanoparticles are provided. For example, by using chemical methods described in Lee and Meisel (Lee, P. and Meisel, 1982 J. Phys. Chem. 86, 3391-3395) and Creighton J *et al.* (Creighton, J., et al. J. 1979 Chem. Soc.-Faraday Trans. 75, 790-798). The first one is a variation of the Turkevich method, but replacing gold(III) chloride (HAuCl₄) trihydrate with silver nitrate (AgNO₃). In this method, the silver nanoparticles obtained usually show a wide-ranging size (high polydispersity) and shape (spheres, rods and triangles) distribution, with a mean particle size around 60 nm. On the other hand, the Creighton method involves the reduction of AgNO₃ with sodium borohydride (NaBH₄) in an ice-bath, providing AgNPs of about 10 nm with a narrow-range size distribution (monodisperse).

In a particular embodiment of the first aspect of the invention, optionally in combination with any of the embodiments provided above or below, in step (a), the NP provided is obtained by chemical reduction of metal salts. For example, by reduction of silver nitrate for the production of AgNPs, or by reduction of HAuCl₄ for the production of AuNPs.

In a particular embodiment of the first aspect of the invention, optionally in combination with any of the embodiments provided above or below, the basic conditions in step (b) comprise an alkali hydroxide (alkali metal hydroxide), in another embodiment is sodium hydroxide.

In a particular embodiment of the first aspect of the invention, optionally in combination with any of the embodiments provided above or below, in order to avoid uncontrolled nanoparticle agglomeration, in step (b) the conjugation of the metal NPs with the SERS reporter (codification) and with the polymeric stabilizer (functionalization) in basic conditions is performed first by adding the SERS reporter and the polymeric stabilizer in ethanol (mixing by stirring), later adding the NPs dissolved in water in said ethanol solution and then adding the basic solution (for example, NaOH)).

In a particular embodiment of the first aspect of the invention, optionally in combination with any of the embodiments provided above or below, in step (b) the SERS reported is conjugated in the first place followed by conjugation of the polymeric stabilizer; or, alternatively, the polymeric reporter is conjugated in the first place and followed by the conjugation of the SERS reporter; or, alternatively, the SERS reporter and the polymeric stabilizer are conjugated at the same time (are added simultaneously).

As indicated above, the conjugation of step (b) is performed in basic condition in order to obtain a controlled agglomeration, and it can be performed by mixing the SERS reporter and the polymeric stabilizer and the metal NP in a water/ethanol/NaOH suspension. The conjugation of the metal NPs to the SERS reporter and the polymeric stabilizer can be performed using well-known protocols, but as indicated the present application using basic conditions for the conjugation, for example, protocols disclosed in Qian X, et al. 2008 "In vivo tumor targeting and spectroscopic detection with surface-enhanced Raman nanoparticle tags." Nat Biotechnol.26(1):83 - 90. doi:10.1038/nbt1377, Mir-Simon, B., et al. 2015 "Universal One-Pot and Scalable Synthesis of SERS Encoded Nanoparticles". Chem. Mater. 27, 950-958.

In a particular embodiment of the first aspect of the invention, optionally in combination with any of the embodiments provided above or below, the SERS reporter and/ or the polymeric stabilizer comprises a thiol group (-SH), an amine group (-NH₂), a nitro group (-NO₂) or an isothiocyanate group (-N=C=S), therefore the binding between the SERS reporter and/ or the polymeric stabilizer and the metal NPs is through any said groups. The binding is considered a covalent bond in the case of -SH or -N=C=S and an electrostatic interaction with -NH₂ or -NO₂.

In particular embodiment, optionally in combination with any of the embodiments provided above or below, the metal NP is conjugated to the SERS reporter and the polymeric stabilizer by a covalent binding.

In one embodiment of the first aspect of the invention, optionally in combination with any of the embodiments provided above or below, the metal NP is conjugated to the SERS reporter and the polymeric stabilizer agent via a -S- atom contained in the SERS reporter and the polymeric stabilizer.

In a particular embodiment of the first aspect of the invention, optionally in combination with any of the embodiments provided above or below, both the polymeric stabilizer and the SERS reporter have a thiol group and the binding between them and the metal NPs is through said thiol groups.

A SERS reporter of the invention (sometimes referred to as a Raman active molecule or Raman dye or Raman probes or Raman labels or SERS tag) refers to a molecule which exhibits a characteristic Raman spectrum upon excitation with light. Due to the proximity of the Raman active molecule to the surface of a metal nanoparticle within a complex of the invention, the Raman signal is enhanced. The Raman code comprises one or several molecules having a high SERS signal. Non-limiting illustrative examples of said molecules having a high SERS signal include organic dyes, for example, rhodamines, indole derivatives, azo dyes, porphyrins, perylenes, acridines, anthraquinones, arylmethanes, indamines, oxazones, oxazines, indophenols, thiazines, xanthens or fluorenes; organometallic compounds, for example, porphyrins, phthalocyanines, or organic lacquers coordinated with transition metals; aromatic compounds, for example, thiolated, aminated or nitrated derivatives of the benzene, naphthalene, pyrene or anthracene, such as benzenethiol, or naphthalenethiol.

In one embodiment of the first aspect of the invention, optionally in combination with any of the embodiments provided above or below, SERS reporters include thiolated aromatic compound is selected form the group consisting of: 4-mercatobenzoic acid (MBA), 4-mercaptopyridine (4-MPY), 2-mercaptopyridine (MPy), benzenethiol (BT), 4-nitrobenzenethiol (4-NBT), 3,4-dicholorobenzenethiol (DBT), 3-fluorothiophenol (3-FTP), 4-fluorothiophenol (4-FTP), 3,5-bis(trifluoromethyl)benzenethiol (3-FMBT), methylene blue (MB), Nile blue A (NBA), and rhodamine 6G (R6G), 4-aminothiophenol (PATP), 3,5-dichlorobenzenethiol (3,5-DCT), 1-naphtalenethiol (1NT), and 2,3,5,6-tetrafluorobenzenethiol (2356TFBT); and the polymeric stabilizer is an aliphatic chain polymer with at least eight carbon atoms and a carboxylic group at the end of the chain, for example, selected form the group consisting of: poly-(ethylene glycol) (PEG), and 11-mercaptoundecanoic acid (MUA).

In a particular embodiment of the first aspect of the invention, optionally in combination with any of the embodiments provided above or below, the SERS reporter is an aromatic molecule.

In a particular embodiment of the first aspect of the invention, optionally in combination with any of the embodiments provided above or below, the polymeric stabilizer is an aliphatic chain polymer with at least eight carbon atoms and a carboxylic group at the end of the chain.

In a particular embodiment of the first aspect of the invention, optionally in combination with any of the embodiments provided above or below, the polymeric stabilizer is a carboxy-polyethylen glycol (PEG)-thiol with at least eight carbon atoms. In an example, is between and including eight carbon atoms and up to 200 carbon atoms. In an example, the PEG has a molecular weight of less or equal to 15,000 Daltons. For example, wherein the PEG (PEGn) is between and including PEGs and PEG₂₀₀, for example, is PEG₈, PEG₉, PEG₁₀, PEG₁₁, PEG₁₂, PEG₁₃, PEG₁₄, PEG₁₅, PEG₂₀, PEG₃₀, PEG₄₀, PEG₅₀, PEG₆₀, PEG₇₀, PEG₈₀, PEG₉₀, PEG₁₀₀, PEG₁₁₀, PEG₁₂₀, PEG₁₃₀, PEG₁₄₀, PEG₁₅₀, PEG₁₆₀, PEG₁₇₀, PEG₁₈₀, PEG₁₉₀, or PEG₂₀₀. In another example, the PEGn is a carboxy-PEGn-thiol. In yet, another example, is carboxy-PEG₈-thiol (CT(PEG)8) or carboxy-PEG₁₂-thiol (CT(PEG)12) or a PEG with 7500 Daltons.

In a particular embodiment of the first aspect of the invention, optionally in combination with any of the embodiments provided above or below, the SERS reporter is a thiolated aromatic compound and is selected form the group consisting of: 4-mercatobenzoic acid (MBA), 4-mercaptopyridine (4-MPY), 2-mercaptopyridine (MPy), benzenethiol (BT), 4-nitrobenzenethiol (4-NBT), 3,4-dicholorobenzenethiol (DBT), 3-fluorothiophenol (3-FTP), 4-fluorothiophenol (4-FTP), 3,5-bis(trifluoromethyl)benzenethiol (3-FMBT), methylene blue (MB), Nile blue A (NBA), and rhodamine 6G (R6G), 4-aminothiophenol (PATP), 3,5-dichlorobenzenethiol (3,5-DCT), 1-naphtalenethiol (1NT), and 2,3,5,6-tetrafluorobenzenethiol (2356TFBT); and the polymeric stabilizer is an aliphatic chain polymer with at least eighth carbon atoms and a carboxylic group at the end of the chain, for example, is selected form the group consisting of: poly-(ethylene glycol) (PEG), and 11-mercaptoundecanoic acid (MUA).

In a particular embodiment of the first aspect of the invention, optionally in combination with any of the embodiments provided above or below, the polymeric stabilizer is carboxy-PEG₁₂-thiol or TPEGCOOH of less than 15kDa.

In a particular embodiment of the first aspect of the invention, optionally in combination with any of the embodiments provided above or below, the polymeric stabilizer is MUA.

In one embodiment of the first aspect of the invention, optionally in combination with any of the embodiments provided above or below, the surface of the NP is conjugated at 1%, 2%, 3%, 4%, 5%, 10%, 20%, 30%, 40%, 50%, 60%, 70%, 80%, 90%, 91%, 92%, 93%, 94%, 95%, 96%, 97%, 98%, 99% or 100% by the SERS reporter and the stabilization polymer. In a particular embodiment, the surface of the NP is conjugated at 100% by the SERS reporter and the stabilizer.

In a particular embodiment of the first aspect of the invention, optionally in combination with any of the embodiments provided above or below, the ratio between stabilizing agent:SERS reporter is 1:1, 1:2, 1:3, 1:4, 1:5, 1:6, 2:1, 2:2, 2:4, or 2:6.

In a particular embodiment of the first aspect of the invention, optionally in combination with any of the embodiments provided above or below, the quantity of SERS reporter is 0.5-6 molecules/nm² of the metallic surface of the NPs and a quantity of the polymeric stabilizer (for example, carboxy-PEG₁₂-thiol) of a maximum of 2 molecules/nm² of the metallic surface of the NPs (for example, 0.1 to 2 molecules/nm² of the metallic surface of the NPs) .

In a particular embodiment of the first aspect of the invention, optionally in combination with any of the embodiments provided above or below, the SERS composition comprises AgNP, wherein the SERS reporter is MBA and the polymeric stabilizing agent is carboxy-PEG₁₂-thiol; or, alternatively, comprises AgNP, the SERS reporter is MBA and the polymeric stabilizing agent is carboxy-PEG-thiol of 7.5 KDa (which corresponds to, approximately, PEG₁₈₀).

In a particular embodiment of the first aspect of the invention, optionally in combination with any of the embodiments provided above or below, in step (d), when the metal oxide is SiO₂, the solution containing water, NH₄OH and ethanol can have, for example, a final concentrations of 7.94 M water, 0.128 M NH₄OH and 14.60 M ethanol. For example, the molar ratio EtOH/H₂O of 1.84.

There are well known means in the current state of the art to coat a metal NP which can be used to coat the metal NP agglomerate of the present invention. In a particular embodiment of the first aspect of the invention, optionally in combination with any of the embodiments provided above or below, when the metal oxide is SiO₂, the coating with SiO₂ can be performed by a modified Stöber method (for example, described in Zhang, Youlin et al. (2013). "A versatile synthesis route for metal@SiO2 core-shell nanoparticles using 11-mercaptoundecanoic acid as primer". J. Mater. Chem. C. 1. 10.1039/C3TC31171F; or Wong YJ et al. "Revisiting the Stöber Method: Inhomogeneity in Silica Shells" J. Am. Chem. Soc. 2011, 133, 30, 11422-11425). When the metal oxide is TiO₂, a compact amorphous TiO₂ layer can be deposited on the NPs agglomerate via controlling the hydrolysis and condensation of tetrabutyl titanate (TBOT) in ethanol/ammonia mixtures (W. Li, et al. (2012), "A Versatile Kinetics-Controlled Coating Method To Construct Uniform Porous TiO2 Shells for Multifunctional Core-Shell Structures" J. Am. Chem. Soc., 134, 11864-11867). Both for SiO₂ or TiO₂ the method can be the one described in Li W, Zhao D. "Extension of the Stöber method to construct mesoporous SiO2 and TiO2 shells for uniform multifunctional core-shell structures" Adv. Mater. 2013 Jan 4;25(1):142-9. doi: 10.1002/adma.201203547. PMID: 23397611.

In a particular embodiment of the first aspect of the invention, optionally in combination with any of the embodiments provided above or below, when the metal oxide is SiO₂, after tetraethyl ortosilicate (TEOS) is added, the solution is shaken and left undisturbed at room temperature for 12-48 hours, for example, 24 h.

In a particular embodiment of the first aspect of the invention, optionally in combination with any of the embodiments provided above or below, after performing the coating, step (e) comprises centrifuging to clean the SERS composition by centrifugation at 4000- 8000 rpm during 15-30 min, for example, at 6000 rpm during 20 min, at least one time (for example, 1, 2 or 3 times).

There are well known means in the current state of the art to characterize metal NPs and metal NPs agglomerates, for example by means of their Z potential. The size of the nanocarrier can be measured by any method known to the expert, for example by dynamic light scattering (DLS), mass spectrometry, transmission electron microscopy (TEM) or high-resolution transmission electron microscopy (HR-TEM). For example, using TEM, observations can be performed on a TEM grid (for example, Formvar/Carbon 200 mesh, Copper, Prod#01801, Ted Pella Inc.) measuring at a JEOL JEM 1010 TEM operating at an acceleration voltage of 80 kV with a tungsten filament. The shape, size, and agglomeration of the NPs can be measured by Ultraviolet-visible (UV-Vis) spectrophotometer obtaining an extinction spectrum between 300 and 900 nm (Ultrospec^{™} 2100 *pro.*). The SERS spectra of the NPs can be collected in backscattering geometry with a Renishaw Qontor Reflex system equipped with a 2D-CCD detector and a Leica confocal microscope. For example, the spectrograph can use a high-resolution grating (1200 g cm⁻¹) with additional band-pass filter optics. A 785 nm diode laser can be focused onto the colloidal solution (for example, for [AgNPs] = 4.55-10¹⁰ NPs/mL by a 5x objective (0.12 numerical aperture (NA)). For example, the spectra can be acquired with an exposure time of 1 s (depending on Raman intensity saturation) and a laser power at the sample of ca. 100 mW, using a Renishaw StreamLine accessory.

In a particular embodiment of the first aspect of the invention, optionally in combination with any of the embodiments provided above or below, the metal NP has an average diameter size between 5 and 100 nm.

In one embodiment of the first aspect of the invention, optionally in combination with any of the embodiments provided above or below, the anisotropy aspect ratio of the metal NP is greater or equal to 1.

In one embodiment of the first aspect of the invention, optionally in combination with any of the embodiments provided above or below, the metal NP is a spherical metal NP.

In another embodiment of the first aspect of the invention, optionally in combination with any of the embodiments provided above or below, the metal NP has an average diameter size of the metal core of 5 to 100 nm; for example, 50-80 nm, in another example 60-70 nm.

In another embodiment of the first aspect of the invention, optionally in combination with any of the embodiments provided above or below, the encapsulated NP agglomerate, for example with SiO₂, has an average diameter size of 20 to 500 nm, for example of 20 to 150 nm, of 80 to 140 nm, for example, 100-140 nm.

In another embodiment of the first aspect of the invention, optionally in combination with any of the embodiments provided above or below, the metal NP is a AgNP conjugated with TPEGCOOH (7.5k) and MBA and the agglomerate is coated with SiO₂, wherein the average diameter size of the metal core is 60-70 nm, the diameter-average of the AgNP agglomerate coated with SiO₂ is around 117.8 nm, and the Zeta potential-average of the agglomerate is from and including -24 mV to -25 mV.

In another embodiment of the first aspect of the invention, optionally in combination with any of the embodiments provided above or below, the metal NP is a AgNP, conjugated with CTPEG₁₂ and MBA and the agglomerate is coated with SiO₂, wherein the average diameter size of the metal core is 60-70 nm, the diameter-average of the AgNP agglomerate coated with SiO₂ is around 130- 135 nm, PDI of the agglomerate is 0.130 and the Zeta potential-average of the agglomerate is from and including -24 mV to -25 mV.

In a particular embodiment of the first aspect of the invention, optionally in combination with any of the embodiments provided above or below, the coated metal nanoparticle agglomerates are round shape, have a Z potential (-10)-(-60) mV, have a diameter of 50-500 nm, and, the metal oxide (for example, SiO₂) layer have a thickness of 15-30 nm.

The second aspect of the invention refers to a labelling tag (label) that comprises the SERS composition of the first aspect of the invention.

In a particular embodiment of the second aspect of the invention, optionally in combination with any of the embodiments provided above or below, the labelling tag is a barcode.

In a particular embodiment of the second aspect of the invention, optionally in combination with any of the embodiments provided above or below, the barcode comprises at least two (for example, 2, 3, 4, 5, 6, 7, 8, 9 or 10) lines or dots each one having a SERS composition with different SERS reporters.

In a particular embodiment of the second aspect of the invention, optionally in combination with any of the embodiments provided below, the SERS composition present in the labelling tag (e.g., a barcode) is a dried composition comprising the SERS NPs agglomerates as defined in the first aspect of the invention, for example, as the liquid component such as ethanol or water has been evaporated.

In a particular embodiment of the second aspect of the invention, optionally in combination with any of the embodiments provided above or below, the labelling tag comprises an adhesive that comprises the SERS metal NP agglomerates, for example to protect the dried nanoparticles from abrasion.

In a particular embodiment of the second aspect of the invention, optionally in combination with any of the embodiments provided above or below, the adhesive is made of an optically transparent material.

In a particular embodiment of the second aspect of the invention, optionally in combination with any of the embodiments provided above or below, the adhesive can act as a support for the SERS metal NP agglomerates, or, alternatively, the labelling tag comprises another support.

In a particular embodiment of the second aspect of the invention, optionally in combination with any of the embodiments provided above or below, the labelling tag is a layered labelling tag that comprises the SERS composition of the first aspect of the invention and an adhesive layer located on top of the SERS composition.

The SERS composition of the first aspect of the invention can be located in the labelling tag by any method known by the expert in the field, for example by contacting the SERS composition with the labelling tag and letting it to dry.

A third aspect of the invention refers to a use of the SERS composition of the first aspect of the invention, or the labelling tag of the second aspect of the invention, for labelling.

In a particular embodiment of the third aspect of the invention, optionally in combination with any of the embodiments provided above or below, the use is for labelling an article, for example,to avoid counterfeiting, and/or for product authentication.

A fourth aspect of the invention refers to an article that comprises the SERS composition of the first aspect of the invention, or the labelling tag of the second aspect of the invention.

In a particular embodiment of the third and fourth aspects of the invention, optionally in combination with any of the embodiments provided above or below, the article is selected form the following group consisting of: leather, fabric, crocheting, metal, paper, wood, glass, stone, gemstone, silicone, composite and plastic.

In a particular embodiment of the third and fourth aspects of the invention, optionally in combination with any of the embodiments provided above or below, the article is a prosthesis (implant).

In a particular embodiment of the fourth aspect of the invention, optionally in combination with any of the embodiments provided above or below, the ink of the present invention can be inserted into the human body as located in the prosthesis, allowing Raman characterization through the human skin or tissue.

In a particular embodiment of the fourth aspect of the invention, optionally in combination with any of the embodiments provided above or below, the article is selected form the following group consisting of: breast implant, dental implant, or orthopaedic implant such as Austin-Moore prosthesis, Baksi's prosthesis, Charnley prosthesis, Grosse-Kempf nail, or Harrington rod. For breast implants the nanoparticles can be injected inside a silicone gel, elastomer silicone or structured and composite filler. The nanoparticles can be placed at a maximum depth of 5 mm from the surface of the implant to facilitate its measurement with a handheld Raman spectrometer. Besides, the surface of the breast implant will prevent the interaction between the composition or labelling tag of the present invention and the human blood or tissues. The implant can also be a metallic implant (for example, of stainless steel, cobalt-chromium alloys, pure titanium, or titanium alloys), for example, the composition or labelling tag of the present invention can be placed on the surface of the implant and covered with a biocompatible material such as SiO₂ or TiO₂.

The ink of the present invention can be inserted into the human body as located in the prosthesis allowing Raman characterization through the human skin and tissue.

A fifth aspect of the invention refers to a method of preparing the SERS composition of the first aspect of the invention comprising the steps of:
(a) providing metal NPs;
(b) conjugating the metal NPs with a SERS reporter and a polymeric stabilizer by contacting the nanoparticles, the SERS reporter, and the polymeric stabilizer in basic conditions in a solution of water and (C₁-C₄) alcohol (for example, ethanol, methanol, and isopropanol); yielding to a codified SERS and functionalized metal NPs and,
(c) agglomerating the codified SERS and functionalized metal NPs obtained in step (b) by centrifuging the solution obtained on step (b) at a pH of 7 to 12 (for example, pH 8) at an speed of 4,000-6,000 r.p.m. (4000-6000 r.p.m.) (for example, 4,800 r.p.m. (2,189 x g), generally during 10-40 minutes (for example, 30 minutes), re-suspending the codified SERS and functionalized metal NPs agglomerates in water; centrifuging them at a speed of 1,500 to 4,000 r.p.m. (1500-4000 r.p.m.) (for example, 2,000 r.p.m. (380 x g)) at pH 4 to 6.5 (e.g. pH 5 to 6 (for example, pH∼5.5)), generally during 10-30 minutes to form the agglomerates, and re-suspending the obtained agglomerates in a solution comprising water;
(d) encapsulating with a coating of metal oxide (at suitable conditions) yielding to encapsulated NPs agglomerates; for example, when the metal oxide is SiO₂, NH₄OH, (C₁-C₄) alcohol (for example, ethanol) and tetraethyl ortosilicate are added to the solution obtained in step (c), or, alternatively, when the metal oxide is TiO₂, tetrabutyl titanate (TBOT), NH₄OH, and (C₁-C₄) alcohol (for example, ethanol) are added to the solution obtained in step (c).

In a particular embodiment of the fifth aspect of the invention, optionally in combination with any of the embodiments provided above or below, it further comprises the following steps:
(e) centrifuging the coated metal NP agglomerates to remove excess reactants, and
(f) re-dispersing the coated agglomerate t in a suitable solvent (for example, ethanol).

All the embodiments of the first aspect of the invention are also embodiments of the fifth aspect of the invention.

In a particular embodiment of the fifth aspect of the invention, optionally in combination with any of the embodiments provided above or below, the basic conditions in step (b) are obtained with NaOH at pH 7.5-9 (e.g., pH 8) in a solution of water and ethanol, for example the mixture of water/ethanol is 40-60% v/v, e.g., is 50% v/v.

A sixth aspect of the invention refers to method to locate, to identify, and/or to track an article (the article of the fourth aspect of the invention) which comprises using of SERS detection means over the article.

Therefore, the method of the sixth aspect of the invention is useful to avoid counterfeiting.

Thus, the present invention also refers to a method to avoid counterfeiting that comprises the marking of any article with the SERS composition of the first aspect of the invention or the label of the second aspect of the invention.

In a particular embodiment of the sixth aspect of the invention, optionally in combination with any of the embodiments provided above or below, the SERS composition of the first aspect of the invention or the label of the second aspect of the invention, is placed in a micro or millimetric hole on the surface of the object and dried (for example in the nameplate of the item which could be drilled or perforated), or, alternatively, injected into porous materials, such as leather or fabric.

A seventh aspect of the invention refers to a device that comprises the SERS composition of the first aspect of the invention or the label of the second aspect of the invention.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim and shall not be construed as limiting the scope of the claim. Furthermore, the present invention covers all possible combinations of particular and preferred embodiments described herein.

### Examples

### Example 1: synthesis of the SERS metal nanoparticle agglomerate

### Materials:

Silver nitrate (AgNO₃, 99.9999%, Sigma Aldrich), Chloroauric acid (HAuCl₄, 99.995% w/w, Sigma Aldrich), Hidroquinone (HQ, ≥99%, Sigma Aldrich, trisodium citrate (Na₃Cit, 99%, PanReac Applichem), ascorbic acid (AA, Bioextra, MERCK), Magnesium sulfate (MgSO₄, ≥90%, Aldrich), hydrogen peroxide (H₂O₂, 50wt.% in water, Sigma Aldrich), hydrochloric acid (HCI, 37%, Sigma Aldrich), nitric acid (HNO₃, 70%, Scharlau), ammonium hydroxide (NH₄OH, analytical reagent grade 35%, Sigma Aldrich), sodium hydroxide (NaOH, 97%, Fisher chemical), 4-Mercaptobenzoic Acid (MBA, 90%, Sigma Aldrich), TPEGCOOH 7.5k (MW 7500, 99%, Sigma Aldrich), CTPEG₁₂. (carboxy-PEG₁₂-thiol, Thermo scientific), Tetraethyl orthosilicate (TEOS, 99%, Sigma Aldrich). All chemicals were used as received. Milli-Q grade water was used in all preparations.

### 1.1. Synthesis of the nanoparticles

### 1.1.1 Silver NPs (AgNPs)

### Materials and methods:

AgNO₃ 0.1 M, MgSO₄ 0.1 M, Na₃Cit 0.1 M and AA 0.1 M were prepared. Those solutions were protected from the light and stored at 4 °C.

Before synthetizing AgNP-Citrate (AgNP-Cit), the glassware and magnets were cleaned with *Aqua Regia,* basic piranha (RCA) and Aqua Regia again in order to avoid contaminations.

*Aqua regia* (HCl:HNO₃, 3:1) preparation: in the Erlenmeyer to be cleaned it was prepared 12 mL of concentrated HCI + 4 mL of concentrated HNO₃ (always adding HNO₃ to HCI). The entire glass surface was cleaned with the Aqua Regia solution. The Aqua Regia was removed. Afterwards, it was washed a minimum of 15-20 times with 50 mL of Milli-Q water. Aqua Regia was used to remove possible inorganic contaminations. Sin certain cases were a contamination remained, Basic piranha (RCA) was used to remove remaining organic contaminations.

Basic piranha-RCA (H₂O:H₂O₂:NH₄OH 5:1:1) preparation: in an Erlenmeyer flask of 500 mL, 425 mL of Milli-Q water was added first, then 85 mL of H₂O₂ and finally 85 mL of NH₄OH, always following this order. The solution was heated at 60 °C for 20-30 min.

Once the glassware and magnets were cleaned and the reagents prepared, the synthesis of citrate coated AgNPs (AgNPs-Cit) was performed. This synthesis consisted on the addition of two solutions: Solution 1: Na₃Cit + AA (by mixing 50 mL of 5,115 mL Na₃Cit 0.1 M and 375 µL AA 0.1 M) and Solution 2 (by mixing 839 µl of MgSO₄ solution and 1.116 µl of AgNO₃ solution. Both solutions were prepared at the same moment in different falcons. After 4 minutes, solution 1 was to a boiling water solution. Then, after 1 minute, solution 2 was added to mixture. The final solution was kept stirring at 300 °C for at least 30 minutes. Finally, the solution was left undisturbed until it reached the room temperature. Milli-Q water was added to achieve a final volume of 250 mL. The nanoparticles were protected from the light and stored at 4 °C.

### 1.1.2 Gold NPs (AuNPs)

### Materials and methods:

Once the glassware/magnets were cleaned and the reagents prepared, the synthesis of citrate coated AuNPs (AuNPs-Cit) was performed, using the same stock solutions prepared for the synthesis of AgNPs.

Milli-Q water (250 mL) was heated in an Erlenmeyer flask at the maximum temperature in the hot-plate (ca. 300 °C). Once water started boiling, stirring was started and it was added the following: 678 µL Na₃Cit 0.1 M and after 2 min, 623.7 µL HAuCl₄ 0.1M. The reaction was kept at 300 °C for 30 more min under continuous stirring.

In the same Erlenmeyer flask containing 250 mL of AuNPs-Cit and under continuous stirring it was added the following (at room temperature): 850 microL Na₃Cit 0.1 M, then 682.5 uL HAuCl₄ 0.1 M and finally 567.5 µL HQ 0.1 M, leaving the solution stirring for 30 min.

### 1.2 Functionalization, encoding and controlled agglomeration of the NPs

The functionalization, encoding and controlled agglomeration was performed in the same way both in AgNPs and in AuNPs, for the NPs formed in example 1.1.

### 1.2.1.- Conditions for the encoding and functionalization:

For the encoding and functionalization of the nanoparticles, two different approaches were used: the coding agent and the stabilizer were added to the nanoparticles in water, in a mixture of water and EtOH (pH 5.8) and in the same mixture with NaOH (pH 7.8-8.2). The molar ratio was the following: EtOH/H₂O = 0.56/0.17 = 3.29; and EtOH/H₂O/NaOH = 0.56/0.17/1.15·10⁻⁵.

Of all the attempts, the best results were obtained with the mixture of water, EtOH and NaOH, when NaOH was added in a mixture of EtOH/H₂O. The SERS signal was improved during the first 3 hours by ∼52% compared to the same mixture without the addition of NaOH (Fig. 1A).

The kinetics adsorption of the MBA on the metallic surface was performed with and without NaOH (figure 1A). The samples were characterized after the addition of the nanoparticles to an alcoholic solution that contained a mixture of TPEGCOOH7.5k and MBA. A 785nm laser was focused on the samples and the SERS signal was recorded between 0 and 24 hours. After 24 hours, the SERS improvement was ∼30%. In both cases, the SERS signal reached a plateau after 6 hours. Nevertheless, the SERS signal of the nanoparticles in basic pH (by adding NaOH) was ∼215% higher during the first minutes.

UV-vis characterization of citrate capped AgNPs nanoparticles, MBA functionalized AgNPs in acid pH (∼5.8), and MBA functionalized AgNPs in basic pH (∼8.0) was performed (fig. 1B), an example wherein the adsorption kinetics of MBA in AgNPs is shown in said comparative (fig. 1B). No agglomeration events in the colloidal system were monitored by UV-vis- NIR spectroscopy (Figure 1B) via comparison of the localized surface plasmon resonance (LSPR) at 435 nm associated with isolated silver nanoparticles, and the absorption feature at 650 nm, attributed to plasmonic contributions of interacting particles and thus indicative of agglomeration. However, functionalized silver nanoparticles suffered a plasmon shift (∼12 nm) indicating that the Raman code were properly adsorbed on the metallic surface. On the other hand, there is no significant difference in the UV-vis characterization when MBA codification was performed at pH 5.8 or pH 8.0. In both cases molecules of MBA were adsorbed on the metallic surface. Nevertheless, the packing of the monolayer and the number of the MBA molecules adsorbed were higher at basic pH; this was demonstrated *via* SERS characterization.

The SERS intensity of the nanoparticles was improved by ∼317% if the nanoparticles were functionalized in a mixture of water/EtOH (50% v/v) rather than using only water (figure 1C).

When the functionalization was performed under basic pH, by adding NaOH, the SERS intensity of the ring breathing band of MBA was significantly higher (∼215%) 10 minutes after of the addition of the Raman code and ∼30% after 24 hours (see Figures 1D and 1E, wherein the characteristic bands of the MBA adsorbed on the metallic surface of silver nanoparticles over time were studied, with and without NaOH, 1D and 1E respectively and 1F).

### 1.2.2.- Example of functionalization:

The SERS spectra of the NPs obtained in example 1.2.1 were collected in backscattering geometry with a Renishaw Qontor Reflex system equipped with a 2D-CCD detector and a Leica confocal microscope. The spectrograph used a high-resolution grating (1200 g cm⁻¹) with additional band-pass filter optics. A 785 nm diode laser was focused onto the colloidal solution ([AgNPs] = 4.55·10¹⁰ NPs/mL, 50 µl of the NPs solution in 250 µl eppendorf) by a 5x objective (NA 0.12). The spectra were acquired with an exposure time of 1 s (depending on Raman intensity saturation) and a laser power at the sample of ca. 100 mW.

In the following lines an example is provided, but with other stabilizers the protocol was be the same.

As polymeric stabilizer it was used carboxy-PEG₁₂-thiol or TPEGCOOH of 7.5k (PEG₁₈₀) as examples to stabilize the nanoparticles. Other polymers were used, for example, MUA, with good results.

20 mL of 2.5x10⁻⁴ M AgNPs (or AuNPs) obtained in previous example 1.1 (functionalization with NaOH, as indicated in example 1.2.1) were added in a falcon tube of 50 mL and centrifuged at 5,400 r.p.m. (2,771 x g) during 20min. The supernatant was removed, the NPs were re-dispersed in 20 mL of Milli-Q water and sonicated during 60s. After sonication, the NPs were cleaned again by centrifugation at 4,800 r.p.m (2,189 x g). The same procedure for removing the supernatant was repeated and the nanoparticles concentration was adjusted to ∼2.9x10¹⁰ NPs/mL with Milli-Q water.

Afterwards, TPEGCOOH 7.5k or CTPEG₁₂ was used to provide colloidal stability to the AgNPs or AuNPs during the encoding process. In a falcon tube of 50 mL, 8 mL of ethanol was added and, then, 1 molecules/nm² of the polymer stabilizer and 3 molecules/nm² of MBA was also added under vigorous stirring (molecules/nm² was related to the number of molecules per metallic surface of the nanoparticles). Stock solutions of TPEGCOOH 7.5k or CTPEG₁₂ and MBA 10⁻³ M in ethanol were used. The thiolated molecules stock solutions were prepared in ethanol and stored at 4°C protected from the light. The polymer stabilizer solution was sonicated 15min before using it. After 5 min of the addition of the SERS reporter and the polymer, 8 mL of cleaned AgNPs or AuNPs (2.9x10¹⁰ NPs/mL) were added to the alcoholic solution under vigorous stirring. A fresh aqueous solution of NaOH 0.23 M was prepared, and 80 µl of NaOH solution were added to said NPs solution, and it was kept under stirring for 24h.

Once the nanoparticles were codified (with the SERS reporter) and functionalized (with the polymeric stabilizer), they were agglomerated in a controlled manner by following different centrifugation steps. The NPs were cleaned by centrifugation to promote controlled nanoparticle agglomeration and remove undesired reactants: a first centrifugation at 4,800 r.p.m. (2,189 x g) during 20min (adjusting the pH to 8 using NaOH 0.23 M) and a second centrifugation at ∼2,000 r.p.m. (380 x g) during 15min (pH∼5.5). In both cleanings, re-dispersion of the NPs pellet in Milli-Q water was performed.

### 1.3 Metal oxide encapsulation

The silica encapsulation was performed in the same way both in AgNPs and in AuNPs agglomerates.

A silica shell was grown on the metallic surface of the SERS encoded NPs agglomerates obtained in previous step in order to protect the NPs agglomerates from contaminants and oxidation.

A carboxylic group at the end of the chain of the polymer was necessary in order to properly grow silica oxide.

In a falcon tube of 50 mL, 15 mL of EtOH were added. Afterwards, 304.7 µl of NH₄OH were added using a syringe of 1 mL and mixed properly.

The proper concentrations of H₂O, NH₄OH and ethanol for the silica growth of the SERS encoded particles agglomerates solution was adjusted to yield final concentrations of 7.94 M, 0.128 M and 14.60 M, respectively (the molar ratio EtOH/H₂O = 1.84).

Then, 2.3 mL (∼7.2x10¹⁰ NPs/mL) of codified nanoparticles agglomerates in H₂O were added and mixed. Consecutively, 12.4 µl of TEOS 10% v/v were added and the solution was stirred 30 seconds. After this time, the solution was left undisturbed for 12 hours. Finally, the nanoparticles agglomerates were centrifuged thrice (3 × 6000 rpm, 20 min),) and re-dispersed in 5mL of EtOH.

Transmission electron microscopy (TEM) images were obtained using a JEOL JEM 1010 TEM operating at an acceleration voltage of 80 kV with a tungsten filament. A drop of 10 µL of NPs aqueous dispersion was taken and placed it carefully on a TEM grid. Samples were completely dry at room temperature before TEM analysis. Once the TEM images have been taken, the NPs morphology was checked and calculated the average size and polydispersity of at least 100 NPs with the image processing software "Image J".

The size and zeta potential measurements of the coated NPs agglomerates were performed using Malvern Zetasizer Nano ZS. The samples were prepared in Milli-Q water. Samples were transferred into disposable polystyrene cuvette for size measurement and into disposable folded capillary cells with syringe for zeta potential measurement. Each sample was measured 3 times.

The characterization of the plasmon to know to what extent they were agglomerated and of what size and shape were the particles was performed by UV-Vis spectra. UV-Vis spectra were recorded in a Ultrospec^{™} 2100 pro UV-Visible spectrophotometer. 600 µL NPs solution were added into a Quartz cuvette (104-002-10-40, Hellma), and the extinction spectra between 300 and 900 nm wavelength were recorded (Milli-Q water used as reference).

Alternatively, the metal oxide encapsulation was performed also with TiO₂ using the method described in Li W, Zhao D. Extension of the Stöber method to construct mesoporous SiO2 and TiO2 shells for uniform multifunctional core-shell structures. Adv Mater. 2013 Jan 4;25(1):142-9. doi: 10.1002/adma.201203547. PMID: 23397611; in the same way both in AgNPs and in AuNPs agglomerates.

### Results:

Both the stabilizer and the coding agent were adsorbed by binding of the thiol functional group. In the case of the stabilizer, the maximum number of molecules was between 2.0 and 0.1 per unit of nanoparticle metal surface (nm²). In the case of the coding agent, the maximum number of molecules was between 6.0 and 0.5 per unit of nanoparticle metal surface (nm²)

It was found that almost any aliphatic chain polymer that was at least 8 carbons long could be used as stabilizer. It was also found that PEGs with a molecular weight greater than 15,000 Daltons did not work since it then hindered the formation of hot spots and lowered their SERS efficiency.

The AgNPs and AuNPs were spherical. The anisotropy aspect ratio of the NPs was more than 1. Around 1% of the particles were rod-shaped particles or quasi-flat triangles.

At least 60% in weight of the agglomerates (as exemplified by AgNPs and AuNPs) were agglomerated in dimers, trimers, tetramers, pentamers, or hexamers (fig. 2).

Transmission electron microscopical (TEM) images of the agglomerates AgNPs-TPEGCOOH (7.5k)/MBA-SiO₂ and AuNPs-TPEGCOOH (7.5k)/MBA-SiO₂ were obtained (Figure 2). For the AgNPs-TPEGCOOH (7.5k)/MBA-SiO₂: average polydispersity index (PDI): 0.252; average Z-Average: 117.8nm (same dynamic diameter); average Peak1: 162.47nm. Zeta potential of the nanostructures: -41.2mV.

In the and AgNPs-TPEGCOOH (7.5k)/MBA-SiO₂ NPs agglomerates, based on 40 NPs agglomerates from TEM images, having each NP agglomerates 4 different angles for measurement, it was calculated that the Ag core was approximately 60-70nm (see fig. 3A), the SiO₂ layer was approximately 20nm (see fig. 2A), the diameter-average of the AgNP coated with SiO₂ was 133.8 nm, standard deviation (SD) 0.7506, PDI: 0.130 and the Zeta potential-average was -24.7 mV, SD 0.252. AuNPs-TPEGCOOH (7.5k)/MBA-SiO₂ agglomerates were also obtained (figure 2B).

Figure 3B shows the normalized extinction spectra of the obtained citrate capped AgNPs and AgNPs-TPEGCOOH (7.5k)/MBA-SiO₂. In the case of citrate capped AgNPs, the spectra revealed the characteristic localized-surface plasmon resonances (LSPRs) of spherical silver nanoparticles centered in the UV spectral range. Contingent upon AgNPs-TPEGCOOH (7.5k)/MBA-SiO₂, the appearance of a shoulder at ca. 700 nm and the broaden and shift of the LSPR to the higher wavelengths indicated the significant formation of nanoparticle agglomerates.

Figure 3C represents the Size Histogram of AuNPs-TPEGCOOH (7.5k)/MBA-SiO₂, the average diameter (∼107 nm) was obtained by measuring 40 nanostructures (agglomerates) and 4 different angles for each nanostructure. It is important to emphasize that all populations (isolated NPs, dimers, trimers, tetramers, pentamers, and hexamers) were included in the measurement. The SiO₂ layer was approximately 20nm Figure 3D shows the normalized extinction spectra of citrate capped AuNPs and AuNPs-TPEGCOOH (7.5k)/MBA-SiO₂. In the case of citrate capped AuNPs, the spectra revealed the characteristic localized-surface plasmon resonances (LSPRs) of spherical gold nanoparticles centered in the UV spectral range. Contingent upon AuNPs-TPEGCOOH (7.5k)/MBA-SiO₂, the appearance of a shoulder at ca. 750 nm and the broaden and shift of the LSPR to the higher wavelengths indicated the significant formation of nanoparticle agglomerates.

### 1.4 Comparative with and without the agglomeration step:

### Materials and methods:

It was compared the SERS signal between agglomerated particles following the protocol of the present invention and non-agglomerated (without following the sept of centrifugation and pH control), using the material and steps indicated in examples 1.1, 1.2 and 1.3. In both cases the co-adsortion of the polymeric stabilizer (TPEGCOOH (7.5k) and the SERS reporter (MBA) on the surface of the AgNPs was performed in water/EtOH/NaOH as explained previously in example 1.2.

The conditions for the Raman characterization were the following: SERS spectra were collected in backscattering geometry with a Renishaw Qontor system equipped with a 2D-CCD detector and a Leica confocal microscope. The spectrograph used a high-resolution grating (1200 g cm⁻¹) with additional band-pass filter optics. A 785 nm diode laser was focused onto the colloidal solution (MilliQ water, [NPs]=4.55.10¹⁰ NPs/mL) by a 5x objective (0.12 NA). The solution was placed on a 96 well plate. The time of exposure was 1s, the laser power was set to 100mW, and 1 acquisition was obtained.

For the UV-vis characterization of AgNPs-TPEGCOOH (7.5k)/MBA-SiO₂ NPs it was performed the same way as indicated in example 1.3

### Results:

The SERS intensity of the AgNPs-TPEGCOOH(7.5k)/MBA-SiO₂ and AuNPs-TPEGCOOH(7.5k)/MBA-SiO₂ with and without the controlled agglomeration step is shown in fig. 4. The PEG and the MBA were adsorbed on the surface of the AgNP at the same level. The agglomeration step performed in the controlled manner, by following different centrifugation steps at certain pH conditions, allowed agglomeration of the NPs to form dimers, trimers, tetramers, pentamers, and/or hexamers, which increased the SERS efficiency of the nanoparticles by nearly 40 times (38 times) for the AgNPs (fig. 4A) and 2 times for the AuNPs (fig. 4C).

Figure 4B represents the UV-vis characterization of SERS encoded silver nanoparticles before and after the agglomeration step. Once the agglomeration step was performed it appeared a characteristic absorption feature at ∼700nm attributed to plasmonic contributions of interacting particles and thus indicative of agglomeration. Figure 4D (also UV-vis characterization but for the SERS gold NPs) showed the same behavior as Figure 4B but for gold nanoparticles. Nevertheless, the absorption feature attributed to plasmonic contributions of interacting particles was shifted to ∼750nm in the case of gold nanoparticles.

In comparison with an uncontrolled agglomeration, for examples as the one described in Mir-Simon, B., et al. 2015 "Universal One-Pot and Scalable Synthesis of SERS Encoded Nanoparticles". Chem. Mater. 27, 950-958, the SERS metal NPs composition of the invention was advantageous. If the agglomeration was not controlled, very large agglomerates were produced that precipitated, not being a colloidal suspension, which difficulted to know the amount of particles to be added to, for example, an article; and if the agglomeration was too extreme, the particles merged and then the desired hot spots did not occur. By contrast, by using the controlled agglomeration of the invention, the agglomerates were in form of isolated dimers, trimers, tetramers, pentamers or hexamers (at least 60% in weight of the agglomerates, as seen in TEM and DLS) and had surprising plasmonic properties.

The SERS metal NPs of the invention allowed to know the amount of NPs to be used and with the method of the invention hot spots useful for Raman detection were formed.

The method of the invention allowed to obtain improved SERS metal NPs composition, by controlled agglomeration. With the method of the invention a robust tool for several applications was obtained.

### Example 2: Labelling of articles with the SERS NPs agglomerates of the invention

### Materials and methods:

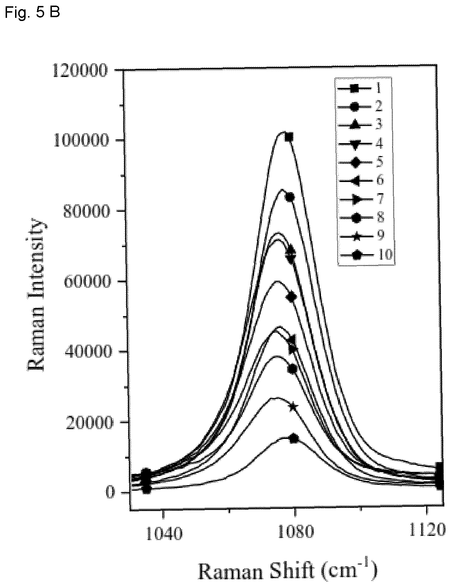

Once the composition comprising silver nanoparticles was synthesized following the methods described in example 1, 20 µl (7.2x10¹⁰ NPs/mL) of the composition which comprises the controlled agglomerated NPs of example 1 (MBA as code and TPEGCOOH7.5k as stabilizing agent) was placed on different materials (see Figure 5) using a regular pipette and the composition was let to dry for 1 hour. The materials were the following: semi-aniline leather, aniline leather, pigmented leather, polyester, silk, plastic (PVC), glass, brass, cotton, pigmented leather.

After 30 minutes, the sample was characterized using a Rensihaw Qontor Raman (3 mW laser power, 0.1 s laser exposure time, 1 acquisition, 20x Leica objective). For the Raman characterization, the laser was focused on the material surface with an 5X objective. The inelastic radiation was collected with a Renishaw's inVia Qontor Raman system, a grating of 1200 I·mm⁻¹, a NIR laser (785 nm) and a Peltier cooled CCD array detector. For AgSiO₂ samples, condition of 0.1s ex, and accumulation 1 were used.

In the metallic nameplate object (object 8) two applications were performed: inside a hole and on the surface of the plate for the composition comprising the AgNPs agglomerates obtained in example 1 (coated with SiO₂ and obtained as indicated in example 1.2 and 1.3). The metallic nameplate had the name "COACH" etched on the surface and it had two holes in the left side of the nameplate. In the name "COACH" letter "C" and "H" were coated by AgSiO₂ NPs. On the left side of nameplate, the upper hole was filled with the composition comprising AgSiO₂ NPs agglomerates.

### Results:

The SERS signal (as indicated, obtained in less than 2 seconds) was robust, showed a sensitivity of ≥99.9%, and the characteristic SERS bands of MBA was clearly observed (see fig. 5A and 5B).

Except for glass, the background signal originated from the marked material was insignificant. In the case of glass, a broad band between 1000 to 1800 cm-1 was observed; however, this did not significantly affect to the ring breathing and C=C stretching bands of MBA.

It was demonstrated that the SERS NP of the present invention can be placed on the surface of the article or on a hole located on said surface, as the results obtained for the Raman intensity when the AgSiO₂ NP agglomerates were placed in the surface or on a hole in the same material was exactly the same.

Same results were obtained using TiO₂ as coating agent. By using SiO₂ or TiO₂ it was possible to protect the SERS composition from contaminants and oxidation and guarantee their stability and SERS signal for a long period of time, for example, for 20 years. The unique properties of the metal oxides of the coating, e.g., SiO₂ (e.g., known surface chemistry, biocompatibility, optical transparency, and colloidal stability) made this material an efficient protective layer for the composition and label of the present invention.

Therefore, it was demonstrated that with the NPs agglomerates of the invention different material can be labelled with a very strong SERS response, allowing the labelling of any type of good.

### Citation List

Turkevich, J., P. C. Stevenson, et al. (1951). "The nucleation and growth processes in the synthesis of colloidal gold." Discussions of the Faraday Society 11: 55-75.
Haiss, W., N. T. Thanh, et al. (2007). "Determination of size and concentration of gold nanoparticles from UV-vis spectra." Anal Chem 79(11): 4215-21.
Lee, P. and Meisel, D. (1982) Adsorption and Surface-Enhanced Raman of Dyes on Silver and Gold Sols. J. Phys. Chem. 86, 3391-3395.
Creighton, J., et al. (1979) "Plasma Resonance Enhancement of Raman-Scattering by Pyridine Adsorbed on Silver or Gold Sol Particles of Size Comparable to the Excitation Wavelength." J. Chem. Soc.-Faraday Trans. li 75, 790-798.
Qian X, et al. (2008) "In vivo tumor targeting and spectroscopic detection with surface-enhanced Raman nanoparticle tags." Nat Biotechnol.26(1):83-90. doi:10.1038/nbt1377.
Mir-Simon, B., et al. (2015) "Universal One-Pot and Scalable Synthesis of SERS Encoded Nanoparticles". Chem. Mater. 27, 950-958.
Zhang, Youlin et al. (2013). "A versatile synthesis route for metal@SiO2 core-shell nanoparticles using 11-mercaptoundecanoic acid as primer". J. Mater. Chem. C. 1. 10.1039/C3TC31171F.
Wong YJ et al. (2011) "Revisiting the Stöber Method: Inhomogeneity in Silica Shells" J. Am. Chem. Soc., 133, 30, 11422-11425.
Li W, et al. (2012), "A Versatile Kinetics-Controlled Coating Method To Construct Uniform Porous TiO2 Shells for Multifunctional Core-Shell Structures" J. Am. Chem. Soc., , 134, 11864-11867.
Li W, Zhao D. (2013) "Extension of the Stöber method to construct mesoporous SiO2 and TiO2 shells for uniform multifunctional core-shell structures". Adv Mater. Jan 4;25(1):142-9. doi: 10.1002/adma.201203547. PMID: 23397611.

## Claims

1. A Surface enhanced Raman scattering (SERS) composition comprising metal nanoparticles (NPs) agglomerates, wherein at least 60% in weight of the agglomerates are in form of isolated dimers, trimers, tetramers, pentamers, hexamers or mixtures thereof, wherein the metal NPs agglomerates comprise the NPs which comprise in their surface a SERS reporter and a polymeric stabilizer; and wherein each agglomerate is encapsulated with a coating of a metal oxide.

2. The SERS composition according to claim 1, wherein the metal oxide of the coating is silicon dioxide (SiO₂) or titanium dioxide (TiO₂).

3. The SERS composition comprising metal NPs agglomerates according to any one of claims 1 or 2, obtainable by a process that comprises the following steps:
(a) providing metal NPs;
(b) conjugating the metal NPs with a SERS reporter and a polymeric stabilizer by contacting the NPs, the SERS reporter, and the polymeric stabilizer in basic conditions in a solution of water and (C₁-C₄) alcohol; yielding to a codified SERS and functionalized metal NPs and,
(c) agglomerating the codified SERS and functionalized metal NPs obtained in step (b) by centrifuging the solution obtained on step (b) at a pH of 7 to 12 at a speed of 4,000-6,000 r.p.m, re-suspending the codified SERS and functionalized metal NPs in water; centrifuging them at a speed of 1,500 to 4,000 r.p.m. at pH 4 to 6.5 to form the agglomerates, and re-suspending the obtained agglomerates in a solution comprising water;
(d) encapsulating the agglomerated SERS NPs obtained in step (c) with a coating of SiO₂ or TiO₂, yielding to encapsulated NPs agglomerates, wherein when the metal oxide is SiO₂, then, NH₄OH, (C₁-C₄) alcohol and tetraethyl ortosilicate are added to the solution obtained in step (c); or, alternatively, when the metal oxide is TiO₂, tetrabutyl titanate (TBOT) in NH₄OH, and (C₁-C₄) alcohol are added to the solution obtained in step (c).

4. The SERS composition according to any one of claims 1 to 3, wherein both the metal nanoparticle agglomerates and the coated metal nanoparticle agglomerates are round shape, have a Z potential of (-10)-(-60) mV, have a diameter of 50-500 nm, and, optionally, the SiO₂ layer have a thickness of 15-30 nm.

5. The SERS composition according to any one of claims 1 to 4, wherein the metal of the NP is selected from the group consisting of: silver, gold, copper, nickel, palladium, platinum, ruthenium, rhodium, osmium, iridium, zinc, titanium, chromium, iron, cobalt, palladium, cadmium, ruthenium, alloys of any of them and any combination thereof.

6. The SERS composition according to claim 5, wherein the metal is silver; or, alternatively, is gold.

7. The SERS composition according to any one of claims 1 to 6, wherein the SERS reporter and/ or the and the polymeric stabilizer comprises a thiol group (-SH), an amine group (-NH₂), a nitro group (-NO₂), or an isothiocyanate group (-N=C=S).

8. The SERS composition according to any one of claims 1 to 7, wherein the SERS reporter is a thiolated aromatic compound and is selected form the group consisting of: mercaptobenzoic acid (MBA), 4-mercaptopyridine (4-MPY), 2-mercaptopyridine (MPy), benzenethiol (BT), 4-nitrobenzenethiol (4-NBT), 3,4-dicholorobenzenethiol (DBT), 3-fluorothiophenol (3-FTP), 4-fluorothiophenol (4-FTP), 3,5-bis(trifluoromethyl)benzenethiol (3-FMBT), methylene blue (MB), Nile blue A (NBA), and rhodamine 6G (R6G), 4-aminothiophenol (PATP), 3,5-dichlorobenzenethiol (3,5-DCT), 1-naphtalenethiol (1NT), and 2,3,5,6-tetrafluorobenzenethiol (2356TFBT); and the polymeric stabilizer is an aliphatic chain polymer with at least eighth carbon atoms and a carboxylic group at the end of the chain selected form poly-(ethylene glycol) (PEG), or 11-mercaptoundecanoic acid (MUA).

9. The SERS composition according to any one of claims 1 to 8 wherein the NPs is a AgNP, or, alternatively, is a AuNP; the SERS reporter is MBA and the polymeric stabilizing agent is carboxy-PEG₁₂-thiol; or, carboxy-PEG-thiol of 7.5 KDa.

10. A labelling tag that comprises the SERS composition as defined in any one of claims 1 to 9.

11. Use of the SERS composition of any one of claims 1 to 9, or the labelling tag defined in claim 10, for labelling an article to avoid counterfeiting and/or for authentication.

12. An article that comprises the SERS composition defined in any one of claims 1 to 9, or the labelling tag defined in claim 10.

13. A method of preparing the SERS composition as defined in any one of claims 1 to 9 comprising the steps of:
(a) providing metal NPs;
(b) conjugating the metal NPs with a SERS reporter and a polymeric stabilizer by contacting the nanoparticles, the SERS reporter, and the polymeric stabilizer in basic conditions in a solution of water and (C₁-C₄) alcohol; yielding to a codified SERS and functionalized metal NPs and,
(c) agglomerating the codified SERS and functionalized metal NPs obtained in step (b) by centrifuging the solution obtained on step (b) at a pH of 7 to 12 at a speed of 4,000-6,000 r.p.m., re-suspending the codified SERS and functionalized metal NPs in water; centrifuging them at a speed of 1,500 to 4,000 r.p.m. at pH 4 to 6.5, to form the agglomerates, and re-suspending the obtained agglomerates in a solution comprising water;
(d) encapsulating the agglomerated SERS NPs obtained in step (c) with a coating of a metal oxide, selected from SiO₂ or TiO₂ by adding tetraethyl ortosilicate or tetrabutyl titanate, NH₄OH and (C₁-C₄) alcohol to the solution obtained in step (c), yielding to encapsulated NPs agglomerates.

14. The method according to claim 13, which it further comprises the following steps:
(e) centrifuging the coated metal NP agglomerates to remove excess reactants, and
(f) re-dispersing the coated agglomerate in a suitable solvent.

15. A method to locate, to identify, and/or to track an article which comprises using of SERS detection means over an article as defined in claim 12.
